(19) Europäisches Patentamt
European Patent Office
Office européen des brevets

(11) **EP 2 147 989 A1**

(12) **EUROPEAN PATENT APPLICATION**

(43) Date of publication:
**27.01.2010 Bulletin 2010/04**

(51) Int Cl.:
**C23F 11/18** (2006.01) **C01B 25/26** (2006.01)
**C02F 1/68** (2006.01)

(21) Application number: **09164600.0**

(22) Date of filing: **03.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **18.07.2008 GB 0813201**

(71) Applicant: **Airedale Chemical Company Limited Cross Hills Keighley Yorkshire BD20 7BX (GB)**

(72) Inventor: **Meredith, Lesley Keighley, Yorkshire BD20 7BX (GB)**

(74) Representative: **Pidgeon, Robert John Appleyard Lees 15 Clare Road Halifax West Yorkshire HX1 2HY (GB)**

(54) **Treatment solution**

(57)     The invention relates to a concentrated treatment solution, particularly a concentrated treatment solution comprising a mixture of sodium dihydrogen phosphate and phosphoric acid. Solutions of the present invention are designed to be used for the treatment of mains drinking water to combat plumbsolvency, where such solutions are safe to store, transport, and handle. Such treatments solutions still allow for high "$P_2O_5$ content".

EP 2 147 989 A1

Printed by Jouve, 75001 PARIS (FR)

**Description**

The present invention relates to a concentrated treatment solution, particularly a concentrated treatment solution comprising a mixture of sodium dihydrogen phosphate and phosphoric acid. Such solutions are safe to store, transport, and handle, and are extremely suitable for treatment of mains drinking water to combat plumbsolvency.

There is a wide-spread need in the water utilities industry to combat plumbsolvency. Plumbsolvency occurs when lead and/or lead salts from lead piping are dissolved or released into the mains water supply to be later ingested by a water consumer in their home. Many homes still have lead piping between the house and the mains water pipes in the road. Although most mains water pipes are now lead-free, it has been impractical to replace all lead piping associated with individual houses. Therefore there exists a risk to the population in terms of the harmful effects of lead poisoning.

Plumbsolvency has been addressed by introducing traces of sodium dihydrogen phosphate into mains drinking water at a water treatment plant, before the water is channelled to consumers' houses. Upon contact with lead piping, phosphates within the water are believed to react with lead species on the surface of the piping to give insoluble lead phosphates. This is believed to create a substantially insoluble surface inside the lead piping, which also protects the piping from further corrosion and lead release. The problem with using sodium dihydrogen phosphate solutions is that, at present, to maintain homogenous solutions at a range of storage temperatures they are supplied as 32 wt% aqueous sodium dihydrogen phosphate solutions. This equates to a "$P_2O_5$ content" (as later defined) of only 18.9 (this is the common measure used by industry to denote phosphate content). Such solutions are therefore undesirably dilute, thus presenting logistical issues in terms of storage and transport of the large volumes required for water treatment.

In an attempt to overcome this problem the water treatment industry has used concentrated aqueous phosphoric acid solutions (~ 75 wt% phosphoric acid). This equates to a "$P_2O_5$ content" of 54.3 wt%. Such solutions are therefore highly concentrated, thus partially solving the problems inherent in the transportation and storage of large volumes. However, handling such solutions is a problem owing to their corrosive and hazardous nature. As such, concentrated phosphoric acid solutions have special transport, storage, and handling requirements, often enforced by Health and Safety legislation. Special personal protective equipment (PPE) is required for operators to handle such solutions. This is unpleasant and inconvenient for the operators and also involves additional expense. Furthermore, special corrosion resistant piping, valves, etc. are required, and equipment maintenance costs are high. Finally, owing to the low pH of concentrated phosphoric acid, there is a risk to consumers if too much phosphoric acid is accidentally added to mains water during water treatment. Mains water with a depressed pH could be harmful to health, and will also affect the properties of detergents, foods, etc. in such water. Furthermore, such water may be more corrosive, for example, to piping in central heating systems.

It is an object of the present invention to provide a treatment solution with a relatively high "$P_2O_5$ content" but without the problems and hazards inherent in the prior art.

According to a first aspect of the present invention there is provided an isolated treatment solution for transporting and treating a mains drinking water supply, comprising dihydrogen phosphate ions; wherein the dihydrogen phosphate ions contribute at least 5 wt% "$P_2O_5$ content" to the solution, where the solution has an overall "$P_2O_5$ content" of at least 20 wt%; and the solution has a saturation point below 0°C.

The present invention provides solutions with high "$P_2O_5$ content" which are relatively safe to transport, store, and handle.

"$P_2O_5$ content" is a measure of phosphate content commonly used in industry. To calculate the "$P_2O_5$ content" it is necessary to convert each phosphate-based species into $P_2O_5$ equivalents. Three worked examples are provided below in relation to i) 75 wt% phosphoric acid solution; ii) 32 wt% sodium dihydrogen phosphate solution; and iii) 45 wt% $NaH_2PO_4$/10 wt% $H_3PO_4$ solution.

For the purposes of demonstrating calculations of "$P_2O_5$ content", a phosphate species of the form $RH_2PO_4$ may be expressed in dehydrated form by:

$$RH_2PO_4 \rightarrow 0.5\, P_2O_5 + 0.5\, H_2O + ROH$$

where R is a hydrogen, a metal, or any appropriate counterion to phosphate.

"P$_2$O$_5$ content" of pure (100%) RH$_2$PO$_4$ =

(0.5 x wt (P$_2$O$_5$)) / [(0.5 x wt (P$_2$O$_5$)) + (0.5 x wt (H$_2$O)) + (1 x wt (ROH))]

Molecular weights apply: wt (P$_2$O$_5$) = 142, wt (H$_2$O) = 18, wt (ROH) = depends on R.

"P$_2$O$_5$ content" of RH$_2$PO$_4$ solution =

(wt% RH$_2$PO$_4$ in solution) x ("P$_2$O$_5$ content" pure RH$_2$PO$_4$)

i) 75 wt% phosphoric acid solution (R = H)

$$H_3PO_4 \rightarrow 0.5\ P_2O_5 + 0.5\ H_2O + H_2O$$

"P$_2$O$_5$ content" of pure H$_3$PO$_4$ =

(0.5 x 142) / [(0.5 x 142) + (0.5 x 18) + (1 x 18)]
= 72.45%

"P$_2$O$_5$ content" of 75% H$_3$PO$_4$ solution =

75 x 72.45%
= 54.34%

ii) 32 wt% NaH$_2$PO$_4$ solution (R = Na)

$$NaH_2PO_4 \rightarrow 0.5\ P_2O_5 + 0.5\ H_2O + NaOH$$

"P$_2$O$_5$ content" of 32% NaH$_2$PO$_4$ solution =

32 x 59.17%
= 18.93%

iii) 45 wt% NaH$_2$PO$_4$ / 10 wt% H$_3$PO$_4$ solution

$$\text{``}P_2O_5 \text{ content''} \text{ contributed by } 45\% \text{ NaH}_2\text{PO}_4 =$$

$$45 \times 59.17\%$$
$$= 26.63\%$$

As the dihydrogen phosphate ions ($H_2PO_4^-$) are solely responsible for the $P_2O_5$ content of $NaH_2PO_4$, the ions themselves can also be said to contribute 26.63 wt% to the overall "$P_2O_5$ content".

$$\text{``}P_2O_5 \text{ content''} \text{ contributed by } 10\% \text{ H}_3\text{PO}_4 =$$

$$10 \times 72.45\%$$
$$= 7.25\%$$

$$\text{Overall ``}P_2O_5 \text{ content''} =$$

$$26.63\% + 7.25\%$$
$$= 33.88\%$$

The contribution made by the dihydrogen phosphate ions to the "$P_2O_5$ content" refers to the wt% "$P_2O_5$ content" attributable directly to the dihydrogen phosphate ions. Any remaining "$P_2O_5$ contents" of the overall "$P_2O_5$ content" is necessarily attributable to some other phosphate-based species, e.g. phosphoric acid.

In this specification, a solution's "saturation point" is given as a temperature - the temperature of saturation. This is the temperature at which the solution is thermodynamically saturated. Below this temperature precipitation or crystallisation will occur if kinetically viable. This does not include precipitation or crystallisation arising from slight caking at the meniscus around the top of a container where partial-evaporation has led to deposits which are then kinetically insoluble.

The present invention does not encompass unisolated intermediate solutions and slurries formed during the production and isolation of dihydrogen phosphate salts from such as concentrated phosphoric acid solutions. Such intermediates are not isolated to form solutions of the present invention which are readily transportable and usable to treat mains drinking water. However, solutions of the present invention may indeed be formed by the careful treatment of phosphoric acid solutions with base, followed by subsequent isolation.

The treatment solution preferably has an overall "$P_2O_5$ content" of at least 25 wt%, more preferably 30 wt%, and most preferably 33 wt%.

The treatment solution preferably has an overall "$P_2O_5$ content" of at most 60 wt%, more preferably 50 wt%, and most preferably 40 wt%.

The dihydrogen phosphate ions preferably contribute at least 10 wt% "$P_2O_5$ content" to the solution, more preferably 20 wt%, and most preferably at least 25 wt%.

The dihydrogen phosphate ions preferably contribute at most 36 wt% "$P_2O_5$ content" to the solution, more preferably at most 30 wt%, most preferably at most 27 wt%.

The treatment solution preferably has a saturation point below -10°C, more preferably below -15°C, and most preferably below -18°C.

Preferably the treatment solution is an aqueous treatment solution, preferably comprising no solvents other than water.

The dihydrogen phosphate ions preferably derive from a dihydrogen phosphate salt. This may be a dihydrogen phosphate salt formed in situ in solution, or a dihydrogen phosphate salt which was pre-formed and dissolved in a solvent such as water. The salt may be a metal salt, preferably an alkali metal salt, most preferably a sodium salt - sodium dihydrogen phosphate.

The dihydrogen phosphate salt preferably comprises at least 10 wt% of the solution, more preferably at least 40 wt%, most preferably at least 44 wt%. The dihydrogen phosphate salt preferably comprises at most 60 wt% of the solution, more preferably at most 50 wt% of the solution, and most preferably at most 46 wt%. These preferences apply regardless of how the solution is formed.

Preferably the treatment solution comprises an acid, most preferable phosphoric acid. Phosphoric acid has been shown by the applicants to be particularly preferable as a co-acid for increasing the potential maximum sodium dihydrogen phosphate concentration in an aqueous solution at a given temperature. The presence of phosphoric acid in a sodium dihydrogen phosphate solution will therefore decrease the temperature of saturation ("saturation point") for that solution.

The phosphoric acid preferably contributes at least 2 wt% "$P_2O_5$ content" to the solution, more preferably 5 wt%, and most preferably at least 7 wt%.

The phosphoric acid preferably contributes at most 51 wt% "$P_2O_5$ content" to the solution, more preferably 30 wt%, and most preferably at most 15 wt%.

The phosphoric acid preferably comprises at least 2 wt% of the treatment solution, more preferably 5 wt%, and most preferably at least 9 wt%. The phosphoric acid preferably comprises at most 70 wt% of the treatment solution, more preferably 20 wt%, and most preferably at most 11 wt%.

The neat treatment solution preferably has a pH of at least 0.9, more preferably at least 1.5, and most preferably at least 2.5. The pH is preferably at most 4, more preferably at most 3, and most preferably at most 2.8. In this specification all pHs are defined at standard temperature and pressure.

The solution is preferably formed by treating a diluted phosphoric acid solution with a base, preferably a concentrated solution of base such as a 50 wt% aqueous sodium hydroxide solution. The treatment solution is then preferably isolated having an excess of phosphoric acid.

Alternatively, the solution may be formed by dissolving or "slurrying" a pre-formed dihydrogen phosphate salt in water before adding acid (preferably phosphoric acid) to the solution. The addition order may naturally be reversed.

It will also be apparent to the skilled person that it is within the scope of the present invention to form such solutions by the acidification of monohydrogen phosphate and phosphate salt solutions.

The treatment solution of the present invention is preferably substantially non-corrosive. Such non-corrosiveness is measured in terms of the dry weight loss of a steel bar that has been half submerged by volume in the treatment solution at ambient temperature (20°C) for 5 days. Non-corrosiveness may therefore be where there is a less than 10% weight loss, preferably a less than 7% weight loss, and most preferably a less than 5% weight loss.

Preferably the solution is free of surfactants. By "surfactants" is meant any cationic, anionic, amphoteric, or non-ionic surfactants.

When the treatment solution is diluted to give 1 to 20 mg P/litre, such as in water treatment, it preferably reacts with lead species on the surface of lead pipes to give lead phosphates. P/litre refers to weight of atomic phosphorus per litre.

According to a second aspect of the present invention there is provided a method of preparing a treatment solution of the first aspect, comprising forming a solution of dihydrogen phosphate ions; and isolating the solution.

Isolating the solution may involve cooling or allowing the solution to cool to below 40°C, preferably below 30°C. It may also include transferring the solution into a storage container.

Preferably the method also comprises introducing an acid into the solution, whether before or after forming the solution of dihydrogen phosphate ions.

Preferably the method involves treating a diluted phosphoric acid solution with a base, preferably a concentrated solution of base, such as a 50 wt% aqueous sodium hydroxide solution. The method may further comprise stopping the addition of base, preferably to leave at least 2 wt% excess phosphoric acid, more preferably at least 5 wt%, and most preferably at least 9 wt%. Preferably stopping the addition occurs to leave at most 70 wt% phosphoric acid, more preferably at most 20 wt% phosphoric acid, and most preferably at most 11 wt% phosphoric acid.

Alternatively, the solution may be formed by dissolving or "slurrying" a pre-formed dihydrogen phosphate salt in water before adding acid (preferably phosphoric acid) to the solution. The addition order may naturally be reversed.

It will also be apparent to the skilled person that it is within the scope of the present invention to form such solutions by the acidification of monohydrogen phosphate and phosphate salt solutions.

The method may involve further diluting the solution to solubilise all solids.

According to a third aspect of the present invention there is provided a treatment solution comprising water, phosphoric acid, and a dihydrogen phosphate salt.

Preferably the treatment solution essentially consists of water, phosphoric acid, and a dihydrogen phosphate salt. Preferably any other ingredients are only present in trace quantities.

Preferably the dihydrogen phosphate salt is sodium dihydrogen phosphate, whether formed *in situ* in solution through acid/base chemistry or dissolved in solution as the pre-formed salt. Preferably the solution comprises at least 32 wt% sodium dihydrogen phosphate, more preferably at least 40 wt%, and most preferably at least 44 wt%.

Preferably the phosphoric acid comprises at least 2 wt% of the solution, more preferably at least 5 wt%, and most preferably at least 9 wt%. This applies whether the phosphoric acid is excess phosphoric acid following partial neutralisation of phosphoric acid to form a dihydrogen phosphate salt, or whether the phosphoric acid is separately added to a dihydrogen phosphate salt solution.

Preferred features of the first aspect are also preferred features of the third aspect and visa versa.

According to a fourth aspect of the present invention there is provided a method of decreasing the temperature of saturation (saturation point) of a dihydrogen phosphate salt solution, comprising introducing an acid to the solution. Preferably the acid is phosphoric acid. Preferably the dihydrogen phosphate salt is sodium dihydrogen phosphate.

According to a fifth aspect of the present invention there is provided a package for storing and transporting a treatment solution, comprising a treatment solution according to the first aspect and a container for containing the treatment solution.

According to a sixth aspect of the present invention there is provided a use of the treatment solution of the first aspect, a product of the method of the second aspect, the treatment solution of the third aspect, or the contents of the package of the fifth aspect, delivered into mains drinking water to combat plumbsolvency.

Preferred features of any aspect of the present invention are also preferred features of any other aspects.

The present invention will now be described in detail by reference to the following examples.

**Example 1**

Various 100g sample solutions were produced using various amounts of sodium dihydrogen phosphate (SDP), phosphoric acid (PA) and water.

For example, a solution containing 40 wt% sodium dihydrogen phosphate and 10 wt% phosphoric acid was produced as follows.

To a stirred slurry of sodium dihydrogen phosphate (40 g, 333.3 mmol) in water (46.6 mL) at ambient temperature (20°C) was added 75 wt% phosphoric acid solution (13.3 g, 101.8 mmol). The mixture was stirred until all solids dissolved.

All other solutions were produced in a like manner, with the amount of water in the initial slurry chosen to make up the required overall water content based on the amount of water known to be added in the 75 wt% phosphoric acid solution.

All samples were then stored in a freezer at -18°C for 14 days in sealed glass jars. After 14 days the solutions were all examined for crystalline deposits. If deposits were present, clearly -18°C was below the temperature of saturation (saturation point) for that particular solution. The results are shown in the Table 1 below. Wt % phosphoric acid (PA) is shown along the top row, whereas wt % sodium dihydrogen phosphate (SDP) is shown down the first column.

Table 1

| % PA | 0 | 10 | 20 | 30 | 40 | 50 | 60 | 70 | 80 | 90 | 100 |
|------|---|----|----|----|----|----|----|----|----|----|-----|
| **% SDP** | | | | | | | | | | | |
| **100** | X | | | | | | | | | | |
| **90** | X | X | | | | | | | | | |
| **80** | X | X | X | | | | | | | | |
| **70** | X | X | X | X | | | | | | | |
| **60** | X | X | X | X | X | | | | | | |
| **50** | X | X | X | X | X | X | | | | | |
| **40** | X | S | XS | XS | X | X | X | | | | |
| **30** | S | S | S | S | XS | XS | X | X | | | |
| **20** | S | S | S | S | S | S | S | S | X | | |
| **10** | S | S | S | S | S | S | S | S | X | X | |

(continued)

| % PA | 0 | 10 | 20 | 30 | 40 | 50 | 60 | 70 | 80 | 90 | 100 |
|------|---|----|----|----|----|----|----|----|----|----|-----|
| 0 | S | S | S | S | S | S | S | S | X | X | X |

S - soluble
X - crystalline deposits
XS - slight crystallisation

Certain solutions with low amounts of SDP or phosphoric acid froze at -18°C to give solid solutions. However, when thawed they again gave homogeneous liquid solutions.

This demonstrates that the presence of phosphoric acid allows for solutions with 40 to 50 wt% sodium dihydrogen phosphate at -18°C, whereas only 30 to 40 wt% sodium dihydrogen phosphate was achievable in the absence of phosphoric acid at -18°C. Moreover, with phosphoric acid as the co-acid, the "$P_2O_5$ content" may be increased yet more. Table 2 below shows the $P_2O_5$ contents for all the solutions in Table 1.

Table 2

| % PA | 0 | 10 | 20 | 30 | 40 | 50 | 60 | 70 | 80 | 90 | 100 |
|------|---|----|----|----|----|----|----|----|----|----|-----|
| % SDP | | | | | | | | | | | |
| 100 | 59.2 | | | | | | | | | | |
| 90 | 53.3 | 60.5 | | | | | | | | | |
| 80 | 47.3 | 54.6 | 61.8 | | | | | | | | |
| 70 | 41.4 | 48.7 | 55.9 | 63.2 | | | | | | | |
| 60 | 35.5 | 42.7 | 50.0 | 57.2 | 64.5 | | | | | | |
| 50 | 29.6 | 36.8 | 44.1 | 51.3 | 58.6 | 65.8 | | | | | |
| 40 | 23.7 | 30.9 | 38.2 | 45.4 | 52.6 | 59.9 | 67.1 | | | | |
| 30 | 17.8 | 25.0 | 32.2 | 39.5 | 46.7 | 54.0 | 61.2 | 68.5 | | | |
| 20 | 11.8 | 19.1 | 26.3 | 33.6 | 40.8 | 48.1 | 55.3 | 62.5 | 69.8 | | |
| 10 | 5.9 | 13.2 | 20.4 | 27.7 | 34.9 | 42.1 | 49.4 | 56.6 | 63.9 | 71.1 | |
| 0 | 0.0 | 7.2 | 14.5 | 21.7 | 29.0 | 36.2 | 43.5 | 50.7 | 58.0 | 65.2 | 72.5 |

The lower left hand region of Table 2 enclosed by the bold line is a region of good solubility at -18°C. As expected, having phosphoric acid as the predominant phosphate species allows for higher "$P_2O_5$ contents". However, mixtures are possible where sodium dihydrogen phosphate contributes more "$P_2O_5$ content" than it does in the 32 wt% sodium dihydrogen phosphate solutions currently used ("$P_2O_5$ content" is 18.9 wt%). For instance, in all the samples containing 40 wt% sodium dihydrogen phosphate, there is 23.7% $P_2O_5$ contributed by the sodium dihydrogen phosphate and the dihydrogen phosphate ions associated therewith.

**Example 2**

Another batch of 100g sample solutions was prepared via the preferred process for large scale production of treatment solutions according to the present invention. Described below is a method of producing a 45 wt% sodium dihydrogen phosphate / 10 wt% phosphoric acid solution.

A stirred solution of 75 wt% phosphoric acid solution (62.3 g, 477 mmol) was additionally diluted with water (7.6 g). The solution was then held at room temperature whilst being treated with 50 wt% sodium hydroxide solution (30 g, 375 mmol). The resulting solution contained 45 g sodium dihydrogen phosphate (375 mmol, 45 wt%), 10 g excess phosphoric acid (102 mmol, 10 wt%), and 45 g water (45 wt%).

The initial dilution of phosphoric acid was determined by a) the amount of water present in the 75% aqueous solution of phosphoric acid needed; b) the amount of water present in the 50% aqueous sodium hydroxide needed; and c) the amount of water formed from the reaction between sodium hydroxide and phosphoric acid to form sodium dihydrogen phosphate. The calculation begins with choosing a total weight, the wt% of sodium dihydrogen phosphate (work backwards to sodium hydroxide and phosphoric acid needed), and the wt% of phosphoric acid (this is excess unreacted phosphoric acid).

All other 100 g solutions were produced in a like manner, and were then stored at -18°C for 14 days in sealed glass jars. After 14 days the solutions were all examined for crystalline deposits. If deposits were present, clearly -18°C was below the temperature of saturation (saturation point) for that particular solution. The results are shown in the Table 3 below. Wt % phosphoric acid (PA) is shown along the top row, whereas wt % sodium dihydrogen phosphate (SDP) is shown down the first column.

Table 3

| % PA | 10 | 15 | 20 | 25 | 30 |
|---|---|---|---|---|---|
| | | | | | |
| % SDP | | | | | |
| | | | | | |
| 50 | X | X | X | X | X |
| 45 | S | S | XS | X | X |
| 40 | S | S | XS | XS | XS |
| 35 | S | S | S | XS | XS |
| 30 | S | S | S | S | S |
| * Key as above | | | | | |

The above 45% sodium dihydrogen phosphate / 10% phosphoric acid solution was produced on a 100 Kg scale (the above quantities were scaled-up by 1000 times). The resulting solution was packaged into a storage container (a cylindrical plastic drum) and sealed. The solution was left therein in cold storage (~ 0°) for 3 months, after which time there was no precipitation. This package was highly suitable for transporting and storage.

Furthermore, a freezing point test was carried out specifically upon this 45/10 wt% SDP/PA sample, and the freezing point at atmospheric pressure was -25°C.

Table 4 below shows the $P_2O_5$ contents for all the solutions in Table 3.

Table 4

| % PA | 10 | 15 | 20 | 25 | 30 |
|---|---|---|---|---|---|
| | | | | | |
| % SDP | | | | | |
| | | | | | |
| 50 | 36.9 | 40.5 | 44.1 | 47.7 | 51.4 |
| 45 | 33.9 | 37.5 | 41.1 | 44.8 | 48.4 |
| 40 | 30.9 | 34.6 | 38.2 | 41.8 | 45.4 |
| 35 | 28.0 | 31.6 | 35.2 | 38.8 | 42.5 |
| 30 | 25.0 | 28.6 | 32.3 | 35.9 | 39.5 |

The lower region of Table 4 enclosed by the bold line is a region of good solubility at -18°C.

Table 5 below shows pH values for a range of mixtures.

Table 5

| % PA | 0 | 10 | 20 | 30 | 40 | 50 | 60 | 70 | 100 |
|---|---|---|---|---|---|---|---|---|---|
| | | | | | | | | | |

(continued)

| % PA | 0 | 10 | 20 | 30 | 40 | 50 | 60 | 70 | 100 |
|---|---|---|---|---|---|---|---|---|---|
| **% SDP** | | | | | | | | | |
| **45** | | 2.64 | 1.76 | | | | | | |
| **40** | | 1.56 | 1.19 | 1.02 | | | | | |
| **32** | 4.2 | | | | | | | | |
| **30** | | 1.52 | 1.18 | 0.91 | | | | | |
| **20** | | | | | | | | | |
| **10** | | | | | 1.1 | 0.82 | | 0.7 | |
| **0** | | | | | | | | | 0.72 |

Again, the lower region of Table 5 enclosed by the bold line is a region of good solubility at -18°C.

The present invention thus achieves high "$P_2O_5$ contents" even at high pH.

**Example 3**

Another batch of sample solutions was prepared by the method of Example 2. This time the samples were stored at 2°C for 14 days before assessing their solubility properties. Table 6 below charts the results.

Table 6

| % PA | 0 | 10 | 20 | 30 | 40 | 50 | 60 | 70 | 80 | 90 | 100 |
|---|---|---|---|---|---|---|---|---|---|---|---|
| | | | | | | | | | | | |
| **% SDP** | | | | | | | | | | | |
| | | | | | | | | | | | |
| **100** | X | X | X | X | X | X | X | X | X | X | X |
| **90** | X | X | X | X | X | X | X | X | X | X | X |
| **80** | X | X | X | X | X | X | X | X | X | X | X |
| **70** | X | X | X | X | X | X | X | X | X | X | X |
| **60** | XS | X | X | X | X | X | X | X | X | X | X |
| **50** | S | S | X | X | X | X | X | X | X | X | X |
| **45** | S | S | S | X | X | X | X | X | X | X | X |
| **40** | S | S | S | S | X | X | X | X | X | X | X |
| **30** | S | S | S | S | S | S | X | X | X | X | X |
| **20** | S | S | S | S | S | S | S | S | X | X | X |
| **10** | S | S | S | S | S | S | S | S | X | X | X |
| **0** | S | S | S | S | S | S | S | S | S | X | X |
| * Key as in Example 1 | | | | | | | | | | | |

Table 7 below shows the "$P_2O_5$ contents" across the solution range tested. The lower region of Table 7 enclosed by the bold line is a region of good solubility at 2°C.

Table 7

| % PA | 0 | 10 | 20 | 30 | 40 | 50 | 60 | 70 | 80 | 90 | 100 |
|---|---|---|---|---|---|---|---|---|---|---|---|
| | | | | | | | | | | | |

9

(continued)

| % PA | 0 | 10 | 20 | 30 | 40 | 50 | 60 | 70 | 80 | 90 | 100 |
|---|---|---|---|---|---|---|---|---|---|---|---|
| % SDP | | | | | | | | | | | |
| | | | | | | | | | | | |
| 100 | 59.2 | | | | | | | | | | |
| 90 | 53.3 | 60.5 | | | | | | | | | |
| 80 | 47.4 | 54.6 | 61.9 | | | | | | | | |
| 70 | 41.4 | 48.7 | 55.9 | 63.2 | | | | | | | |
| 60 | 35.5 | 42.8 | 50.0 | 57.3 | 64.5 | | | | | | |
| 50 | 29.6 | 36.9 | 44.1 | 51.4 | 58.6 | 65.9 | | | | | |
| 45 | 26.6 | 33.9 | 41.1 | 48.4 | 55.6 | 62.9 | | | | | |
| 40 | 23.7 | 30.9 | 38.2 | 45.4 | 52.7 | 59.9 | 67.2 | | | | |
| 30 | 17.8 | 25.0 | 32.3 | 39.5 | 46.8 | 54.0 | 61.3 | 68.5 | | | |
| 20 | 11.8 | 19.1 | 26.3 | 33.6 | 40.8 | 48.1 | 55.3 | 62.6 | 69.8 | | |
| 10 | 5.9 | 13.2 | 20.4 | 27.7 | 34.9 | 42.2 | 49.4 | 56.7 | 63.9 | 71.2 | |
| 0 | 0.0 | 7.3 | 14.5 | 21.8 | 29.0 | 36.3 | 43.5 | 50.8 | 58.0 | 65.3 | 72.5 |

This demonstrates that even higher "$P_2O_5$ contents" are appropriate for storage at this temperature.

**Example 4**

Various aqueous sodium dihydrogen phosphate solutions with 45% SDP / 10% acid were prepared using a variety of acids. Solubilities were then checked at -18°C.

Table 8 below charts the solubility properties of the various solutions.

Table 8

| Acid | 45% SDP / 10% Acid soluble? |
|---|---|
| Sulphuric acid | Insoluble |
| Hydrochloric acid | Soluble |
| Nitric acid | Soluble |
| Boric acid | Insoluble |
| Citric acid | Soluble |
| Acetic acid | Soluble |
| Formic acid | Soluble |
| Gluconic acid | Insoluble |

These results demonstrate that acids can in general increase saturation concentration of a dihydrogen phosphate salt solution.

**Example 5**

The 45% sodium dihydrogen phosphate / 10% phosphoric acid solution of Example 2 was diluted to 2mg P/litre with untreated (no phosphates added) drinking water.

45/10 wt% SDP/PA solutions have a $P_2O_5$ content of 33.9 wt%. Therefore, 100mg of the solution has 33.9 mg $P_2O_5$, which is 14.8 mg P (atomic phosphorous). There is 2 mg P in 13.5 mg of solution. Thus 13.5 mg of solution diluted with 1 litre of water gives a diluted solution with 2 mg P/litre.

The resulting solution is representative of the concentration of phosphates in drinking water after the drinking water has been treated with solutions of the present invention, to combat plumbsolvency. Such water is non-toxic and perfectly drinkable.

**Example 6**

Corrosion properties of a range of SDP / phosphoric acid solutions were tested. The solutions comprising relatively more SDP were less corrosive to iron or steel.
The corrosion tests were carried out as follows.
A small mild steel bar (80 x 5 x 3 mm) was first cleaned with abrasive paper, then with methanol, and finally acetone before being allowed to air dry at ambient temperature for 5 hours. The bar was then weighed to give an initial weight.
The bar was then half-immersed in a closed glass jar containing the treatment solution at ambient temperature for 5 days.
After 5 days the appearance of the solution and the bar were observed (solution is a deeper colour when more corrosion has occurred). The bar was then dried on absorbent paper and reweighed. The percentage weight loss from the initial weight represented the level of corrosion of each treatment solution.
The corrosion tests demonstrated the following weight losses:

| | |
|---|---|
| Water | - 0.01% loss |
| 32 wt% sodium dihydrogen phosphate | - 1.82% loss |
| 45/10 wt% SDP/phosphoric acid | - 4.88% loss |
| 75 wt% phosphoric acid | - 22.02% loss |

**Example 7**

The diluted solution of Example 5 is as effective at combating plumbsolvency as either purely sodium dihydrogen phosphate solutions or purely phosphoric acid solutions diluted to equivalent mg P/litre.
The present invention therefore provides safe and concentrated treatment solutions suitable for transport, storage and handling in respect of water treatment for combating plumbsolvency.

**Claims**

1.   An isolated treatment solution for transporting and for treating a mains drinking water supply, comprising dihydrogen phosphate ions; wherein the dihydrogen phosphate ions contribute at least 5 wt% "$P_2O_5$ content" to the solution; where the solution has an overall "$P_2O_5$ content" of at least 20 wt%; and the solution has a saturation point below 0°C.

2.   The treatment solution as claimed in any preceding claim, where the saturation point is below -10°C.

3.   The treatment solution as claimed in any preceding claim, wherein the dihydrogen phosphate ions derive from a dihydrogen phosphate salt, preferably sodium dihydrogen phosphate.

4.   The treatment solution as claimed in claim 3 wherein the dihydrogen phosphate salt comprises at least 10 wt% of the solution.

5.   The treatment solution as claimed in any preceding claim comprising phosphoric acid.

6.   The treatment solution as claimed in claim 5 wherein the phosphoric acid contributes at most 51 wt% "$P_2O_5$ content" to the solution.

7.   The treatment solution as claimed in any preceding claim wherein the treatment solution has a pH between 0.9 and 4.

8.   The treatment solution as claimed in any preceding claim, wherein the treatment solution is substantially non-corrosive.

9.   The treatment solution as claimed in any preceding claim wherein the solution is free of surfactants.

10. A method of preparing a treatment solution as claimed in any of claims 1 to 9, comprising forming a solution of dihydrogen phosphate ions; and isolating the solution.

11. The method as claimed in claim 10, comprising introducing an acid into the solution, whether before or after forming the solution of the dihydrogen phosphate ions.

12. A treatment solution comprising water, phosphoric acid, and a dihydrogen phosphate salt.

13. A method of decreasing the temperature of saturation (saturation point) of a dihydrogen phosphate salt solution, comprising introducing an acid to the solution.

14. A package for storing and transporting a treatment solution, comprising a treatment solution according to any of claims 1 to 9, or claim 12; and a container for containing the treatment solution.

15. A use of the treatment solution of any of claims 1 to 9, a product of the method of any of claims 10 to 11, the treatment solution of claim 12, or the contents of the package of claim 14, delivered into mains drinking water to combat plumbsolvency.

Europäisches
Patentamt

European
Patent Office

Office européen
des brevets

**EUROPEAN SEARCH REPORT**

Application Number

EP 09 16 4600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 860 517 A1 (METAKORIN WASSER CHEMIE GMBH [DE]) 26 August 1998 (1998-08-26) * the whole document * | 12-15 | INV. C23F11/18 C01B25/26 |
| A | DE 197 55 622 A1 (KODIAK WASSER TECHNOLOGIE GMBH [DE]) 24 June 1999 (1999-06-24) * the whole document * | 1-15 | ADD. C02F1/68 |
| A | LYTLE D A ET AL: "CONTROLLING LEAD CORROSION IN THE DRINKING WATER OF A BUILDING BY ORTHOPHOSPHATE AND SILICATE TREATMENT" AMERICAN WATER WORKS ASSOCIATION. JOURNAL, AMERICAN WATER WORKS ASSOCIATION, DENVER, CO, US, vol. 110, no. 3, 1 September 1996 (1996-09-01), pages 202-217, XP000865905 ISSN: 0003-150X * pages 205,207 * | 1-15 | |
| X | US 4 160 740 A (SWEET III FOREST H) 10 July 1979 (1979-07-10) * claim 1 * | 12-14 | TECHNICAL FIELDS SEARCHED (IPC) C23F C01B C02F |
| X | US 3 718 453 A (THOMPSON W) 27 February 1973 (1973-02-27) * claim 1 * | 12-14 | |

The present search report has been drawn up for all claims

| Place of search | Date of completion of the search | Examiner |
|---|---|---|
| Munich | 18 December 2009 | Mauger, Jeremy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 09 16 4600

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2009

| Patent document cited in search report | | Publication date | Patent family member(s) | | Publication date |
|---|---|---|---|---|---|
| EP 0860517 | A1 | 26-08-1998 | AT<br>DE | 207553 T<br>19706410 A1 | 15-11-2001<br>27-08-1998 |
| DE 19755622 | A1 | 24-06-1999 | NONE | | |
| US 4160740 | A | 10-07-1979 | NONE | | |
| US 3718453 | A | 27-02-1973 | BE<br>CA<br>DE<br>ES<br>ES<br>FR<br>IE<br>IL<br>JP<br>NL | 739119 A<br>928932 A1<br>1947643 A1<br>371726 A1<br>395329 A1<br>2018552 A5<br>34022 B1<br>33027 A<br>54002638 B<br>6914201 A | 02-03-1970<br>26-06-1973<br>09-07-1970<br>16-02-1972<br>16-09-1974<br>29-05-1970<br>08-01-1975<br>30-08-1972<br>09-02-1979<br>24-03-1970 |

EPO FORM P0459

For more details about this annex : see Official Journal of the European Patent Office, No. 12/82